# EUROPEAN PATENT SPECIFICATION

(11) **EP 1 263 863 B1**
(45) Date of publication and mention of the grant of the patent: **25.02.2004**
(21) Application number: 01915911.0
(22) Date of filing: 09.03.2001
(51) Int. Cl.: C08K 5/35, C08G 69/48, C08G 69/20, C08G 63/91

(54) **PROCESS FOR PREPARING A BRANCHED POLYMER**
VERFAHREN ZUR HERSTELLUNG EINES VERZWEIGTEN POLYMERS
PROCEDE DE PREPARATION D'UN POLYMERE RAMIFIE

(30) Priority: 10.03.2000 NL 1014605
(43) Date of publication of application: 11.12.2002
(73) Proprietor: DSM IP Assets B.V., 6411 TE Heerlen (NL)
(72) Inventor: LOONTJENS, Jacobus, Antonius, NL-6231 KK Meerssen (NL); PLUM, Bartholomeus, Johannes, Margretha, NL-6235 AJ Ulestraten (NL)
(74) Representative: Mooij, Johannes Jacobus
(86) International application number: PCT/NL2001/000197
(87) International publication number: WO 2001/066617

(56) References cited:
- EP-A- 0 147 792
- EP-A- 0 556 170
- WO-A-96/34909
- WO-A-98/47940
- US-A- 3 862 262
- US-A- 4 595 746
- DATABASE WPI Section Ch, Week 198823 Derwent Publications Ltd., London, GB; Class A23, AN 1988-158448 XP002157844 & JP 63 099228 A (TEIJIN LTD), 30 April 1988 (1988-04-30)

## Description

The invention relates to a process for preparing a branched polymer by contacting a monofunctional or difunctional polymer, whose functional group is at least an -OH or an -NH₂ group, with a multifunctional compound RYₙ. where n > 2 and Y is an -OH group, an -NHₘ group where m = 1, 2, or a -COOH group and R is an alkyl, an aryl group or a cyclic group and in which the Y groups need not be the same.

Such a process is employed especially for the manufacture of branched polymers. In comparison with linear polymers of equal molecular weight, branched polymers present the advantage that they are better processable.

A process for preparing a branched polymer is disclosed, inter alia, in EP-A-77480. In said patent PA 66 prepolymer is blended with 1,3,5-benzene tricarboxylic acid in a twin-screw extruder. The homogenized melt is extruded, cooled and granulated. Unconverted benzene tricarboxylic acid is then extracted with water and the product so obtained is subjected to an after-condensation step in the solid phase.

A drawback of the known process is that it does not allow a functional polymer to be branched in the melt in a reactor with a short residence time.

The object of the invention is to provide a process that does allow this.

This object is achieved in that also a carbonyl bislactamate (CBL) is present that has the following formula: 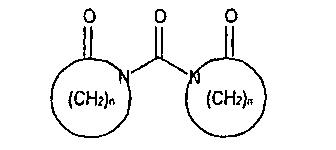 where n is an integer from 3 to 15. Preferably the CBL is carbonyl biscaprolactamate (CBC) with n = 5.

This ensures that a functional polymer can be branched in the melt phase in a reactor at a short residence time without an after-condensation step in the solid phase being necessary.

An advantage of the process according to the invention is that the molecular weight of the materials obtained with the invention can increase without a significant increase in the viscosity.

A further advantage of the process according to the invention is that the rheology of the melt changes favourably: a strong shear thinning effect occurs at high shear rates. A high viscosity at low shear rates and a low viscosity at high shear rates are suitable for blow-moulding and film processing techniques.

'Functional polymer' should here and hereafter be taken to mean a mono- or difunctional polymer whose functional group is at least an -OH group or an -NHₘ group where m = 1, 2. The functional polymer may also contain one or more -COOH groups. The functionality (mono- or di-) is here determined exclusively by the number of -OH or -NHₘ groups per molecule.

Examples of functional polymers are polycondensates and functional polyethers. Suitable polycondensates are polyamides and polyesters.

The process of the invention can in principle be used for all types of polyamide. These include at least the aliphatic polyamides, for example polyamide-4, polyamide-6, polyamide-8, polyamide-4,6, polyamide-6,6, polyamide-6,10, polyamides derived from an aliphatic diamine and an aromatic dicarboxylic acid, for example polyamide-4,T, polyamide-6,T, polyamide-4,l, where T stands for terephthalate and I for isophthalate, copolyamides of linear polyamides and copolyamides of an aliphatic polyamide and a partially aromatic polyamide, for example polyamide-6/6,T and polyamide-6/6,l. The process is particularly advantageous in the case of partially aromatic polyamides and copolyamides requiring a comparatively short polymerization time.

Suitable polyesters for application of the process according to the invention are at least polyesters derived from aliphatic dicarboxylic acids and diols, polyesters of aliphatic diols and aromatic dicarboxylic acids, copolyesters that are partly aliphatic and partly aromatic and polyesters containing units derived from cycloaliphatic dicarboxylic acids. Examples of these are polybutylene adipate, polyethylene terephthalate, poly(trimethylene) terephthalate, polyethylene naphthalate, polybutylene terephthalate, copolyesters of polybutylene adipate and polybutylene terephthalate and the polyesters derived from butane diol and cyclohexane dicarboxylic acid.

The polyether polyols for which the process may be used are polyols which possess a polyoxyalkylene structure, are composed of a polyoxyalkylene group having 1 - 10 carbon atoms an oxygen atom as repeating unit; and which preferably are a diol.

Examples of polyether polyols are polyethylene glycol, polypropylene glycol, polytetramethylene glycol, polyheptamethylene glycol, polyhexamethylene glycol and polydecamethylene glycol.

Multifunctional compounds RYₙ, in which n is greater than two and Y is an -NHₘ, -OH or a -COOH group and R is an alkyl, an aryl group or a cyclic group, such as a isocyanurate. The Y groups need not be the same. Examples of RYₙ are pentaerythritol and the dimer thereof, glycerol, trimethylol propane and the dimer thereof, sorbitol, trishydroxyethyl isocyanurate, diethanol amine, diisopropanol amine, bisethylene trianine, bishexamethylene triamine, triaminoethyl amine, bisethylene triamine, trisaminononane and the ethoxylated or propoxylated versions of the aforementioned monomers, 1,3,5-benzene tricarboxylic acid, tricarboxypentyl melamine, citric acid and trimellitic acid.

Known processes for preparing polyethers are the cationic or anionic polymerization of cyclic ethers. For the preparation of branched polymers a bifunctional or trifunctional monomer is generally copolymerized in the known process. Thus, in the known process branching is effected during the polymerization. No branched polymer is formed when, in the case of functional polyethers, a branching agent such as RYₙ is added in a final extrusion step in the preparation or during processing of a polyfunctional polyether in the melt phase. In that case, the molecular weight of the polymer does not increase.

Known processes for preparing polycondensates such as polyesters and nylons are polycondensation reactions that are carried out by heating monomers in a reactor while discharging condensation products such as water or other volatile components. For the preparation of branched polymers, branching agents are added during polycondensation in the known process. Such branching agents generally are compounds of the type RYₙ where n > 2 and in which Y is an -OH, -NHₘ or a -COOH group and R is an alkyl, an aryl group or a cyclic group.

If in the preparation of polycondensates a branching agent such as RYₙ is added in a final extrusion step in the preparation or during the processing of a polycondensate in the melt phase, alcoholysis, aminolysis or acidolysis of the polycondensate occurs depending on the functional group Y, and the molecular weight of the polymer decreases.

The process according to the invention can be carried out in processing equipment with a short residence time. The residence time in the processing equipment preferably is at least 20 seconds and at most 10 minutes. Shorter times are too short for the reaction to proceed to completion. Longer residence times in processing equipment reactor generally have an adverse effect on the thermal stability of the polymer. It is preferred for the process according to the invention to be carried out in an extruder.

The amount of carbonyl bislactamate used in the process according to the invention may vary between wide limits. In general, at least about 0.1 % by weight relative to the functional polymer is needed in order for an appreciable effect to be achieved. Amounts in excess of 3 % by weight do not generally result in any further increase in molecular weight.

One skilled in the art will in general adjust the amount of carbonyl bislactamate to suit the number of functional groups available and the viscosity increase to be achieved as a result of the increased molecular weight. He will in general determine the optimum amount for his situation through simple experimentation.

The process according to the invention can be carried out in the presence of an acid or a base as a catalyst. The acid or the base may act as a catalyst in the process according to the invention.

This ensures, especially at short residence times in the reactor, that the branching of a functional polymer proceeds further to completion, as appears from a further increase in viscosity.

Acids that are suitable as a catalyst for the preparation of a branched polymer in the presence of CBL are LiX, BX₃, MgX₂, BiX₃, SnX₄. SbX₅, FeX₃, GeX₄, GaX₃, HgX₂, ZnX₂, AlX₃, TiX₄, MnX₂, ZtX₄, R₄NX, R₄PX, HX, where X = R, l, Br, Cl, F, OR and R = alkyl or aryl. Acids such as H₂SO₄, HNO₃, HX, H₃PO₄, H₃PO₃, RH₂PO₂, RH₂PO₃, R[(CO)OH]ₙ, where n = 1 - 6, Sb₂O₃ and As₂O₃ may also be used.

Bases that are suitable as a catalyst for the preparation of a branched polymer in the presence of CBL are M(OH)ₙ, (RO)ₙM (M = alkali or alkaline earth, R = alkyl with C₁ - C₂₀ or aryl), NRₙH₄₋ₙOH, R₃, N, (R = alkyl with C₁ - C₂₀ or aryl and n = 1-4), cyclic amines such as diazobicyclo[2,2,2]octane (DABCO), dimethylaminopyridine (DMAP) and morpholine.

In the process according to the invention, the CBL reacts exclusively with the -NHₘ and -OH functional groups of the functional polymers. Functional polymers which also possess -COOH functionality react with either the - OH or the -NH₂ functional groups.

Preferably, in addition to CBL also a bisoxazine or bisoxazoline is present in the melt in the process according to the invention. This ensures that the reaction proceeds even more rapidly in the case of a functional polymer in which -COOH groups are also present.

The bisoxazoline preferably is 1,4-phenylene bisoxazoline.

The process according to the invention may be used for virgin polymer but also for, for example, polymer recovered from waste.

The process according to the invention is particularly suitable for recycling of polymers. Especially polymer waste often consists of a mixture of different polymers. When functional polymers are present in such waste, the process according to the invention affords the possibility of substantially improving the melt processability of such a mixture and also a manner of improving the mechanical properties of a final product produced by the process according to the invention.

The invention is elucidated with reference to an example, without being limited thereto.

### Example I

Polyethylene terephthalate (PET) with a ηᵣₑₗ of 1.59 and a number of terminal -OH groups (E_{OH}) of 74 mmol/kg and a number of terminal - COOH groups (E_{c}) of 20 mmol/kg was powdered with 1.7 % by weight CBC, 0.3 % by weight 1,4-phenylene bisoxazoline (PBO) and 0.2 % by weight pentaerytritol.

The powdered PET was processed on a ZSK30 twin-screw extruder at a melt temperature of 280°C and at a screw speed of 200 rpm. The residence time in the extruder was 90 seconds. 35 % by weight glass fibre was added to the PET via a lateral feed system. After processing, ηᵣₑₗ had increased to 2.24, E_{c} had increased to 32 and E_{OH} had decreased to 31 mmol/kg. This indicates that a strong increase in viscosity occurs. The viscosity measured at 270°C at two different shear rates is presented in Table 1.

### Comparative Experiment A

Example I was repeated except that no pentaerytritol was present. After processing, ηᵣₑₗ was found to have increased to 1.73, E_{c} was found to have increased to 34 and E_{OH} was found to have decreased to 25 mmol/kg. The viscosity measured at 270°C at two different shear rates is presented in Table 1.

This example and comparative experiment show that the viscosity in Example I has increased much more strongly due to the presence of pentaerytritol. This indicates that pentaerytritol takes part in the reaction, in other words, the branching agent is incorporated. The branched molecule also demonstrates a strong shear thinning effect.

**Table 1:**

| Rheology of PET at 270°C | | |
|---|---|---|
| | Example 1 | Comparative Experiment A |
| Log ω (Rad/s) | η (PaS) | η (PaS) |
| 0 | 27.10⁵ | 5.10⁵ |
| 2 | 5.10⁵ | 3.10⁵ |

## Claims

1. Process for preparing a branched polymer by contacting a monofunctional or difunctional polymer whose functional group is at least an -OH or an - NH₂ group with a multifunctional compound RYₙ, where n > 2 and Y is an - OH group, an -NHₘ group where m = 1, 2, or a -COOH group and R is an alkyl, an aryl group or a cyclic group and in which the Y groups need not be the same, **characterized in that** a carbonyl bislactamate is also present.

2. Process according to Claim 1, in which the carbonyl bislactamate is carbonyl biscaprolactamate.

3. Process according to Claim 1 or 2 in the presence of an acid or a base.

4. Process according to any one of claims 1 - 3 in which also a bisoxazine or a bisoxazoline is present

5. Use of the process according to any one of Claims 1 - 4 in recycling of polymer waste.

## Patentansprüche

1. Verfahren zur Herstellung eines verzweigten Polymers durch Inkontaktbringen eines monofunktionellen oder difunktionellen Polymers, dessen funktionelle Gruppe mindestens eine -OH- oder eine -NH₂-Gruppe ist, mit einer polyfunktionellen Verbindung RYₙ, worin n > 2 und Y eine -OH-Gruppe, eine - NHₘ-Gruppe mit m = 1, 2 oder eine -COOH-Gruppe ist und R eine Alkylgruppe, eine Arylgruppe oder eine cyclische Gruppe ist und worin die Y-Gruppen nicht gleich sein müssen, **dadurch gekennzeichnet, daß** auch ein Carbonylbislactamat vorliegt.

2. Verfahren nach Anspruch 1, in welchem das Carbonylbislactamat Carbonylbiscaprolactamat ist.

3. Verfahren nach Anspruch 1 oder 2 in der Gegenwart einer Säure oder einer Base.

4. Verfahren nach einem der Ansprüche 1 bis 3, in welchem auch ein Bisoxazin oder ein Bisoxazolin vorliegt.

5. Verwendung eines Verfahrens nach einem der Ansprüche 1 bis 4 in der Wiedergewinnung von Polymerabfall.

## Revendications

1. Procédé de préparation d'un polymère ramifié par mise en contact d'un polymère monofonctionnel ou difonctionnel dont le groupe fonctionnel est au moins un groupe -OH ou un groupe -NH₂ avec un composé multifonctionnel RYₙ, dans lequel n est supérieur à 2 et Y est un groupe -OH, un groupe -NHₘ, m étant égal à 1, 2, ou un groupe -COOH et R est un groupe alkyle, un groupe aryle ou un groupe cyclique et dans lequel les groupes Y n'ont pas besoin d'être identiques, caractérisé en qu'un bis-lactamate de carbonyle est également présent.

2. Procédé selon la revendication 1, dans lequel le bis-lactamate de carbonyle est le bis-caprolactamate de carbonyle.

3. Procédé selon la revendication 1 ou 2, en présence d'un acide ou d'une base.

4. Procédé selon l'une quelconque des revendications 1 à 3, dans lequel une bisoxazine ou une bisoxazoline est également présente.

5. Utilisation du procédé selon l'une quelconque des revendications 1 à 4 pour le recyclage des polymères de rebut.
